# EUROPEAN PATENT SPECIFICATION

(11) **EP 4 146 932 B1**
(45) Date of publication and mention of the grant of the patent: **19.06.2024**
(21) Application number: 21725698.1
(22) Date of filing: 05.05.2021
(51) Int. Cl.: F03D 1/00, F03D 13/10, F03D 80/80

(54) **A NACELLE WITH A CRANE ALLOWING ASSEMBLY OF THE NACELLE AND A METHOD FOR MAKING THE NACELLE**
GONDEL MIT EINEM KRAN ZUR MONTAGE DER GONDEL UND VERFAHREN ZUR HERSTELLUNG DER GONDEL
NACELLE AVEC UNE GRUE PERMETTANT L'ASSEMBLAGE DE LA NACELLE ET PROCÉDÉ DE FABRICATION DE LA NACELLE

(30) Priority: 07.05.2020 DK PA202070295
(43) Date of publication of application: 15.03.2023
(73) Proprietor: VESTAS WIND SYSTEMS A/S, 8200 Aarhus N (DK)
(72) Inventor: BAUN, Torben Ladegaard, 8200 Aarhus N (DK); ALEXANDERSEN, Rolf C.B., 8200 Aarhus N Aarhus C (DK)
(74) Representative: Vestas Patents Department
(86) International application number: PCT/DK2021/050142
(87) International publication number: WO 2021/223827

(56) References cited:
- EP-A1- 2 505 541
- EP-A1- 2 871 357
- EP-A1- 3 247 899
- EP-A2- 1 677 006

## Description

### INTRODUCTION

The present invention relates to a method for making a nacelle and a nacelle for a wind turbine.

### BACKGROUND

The size of wind turbines increases in terms of nominal power output as well as in terms of physical dimensions of the individual parts of the wind turbine. Therefore, the size of the nacelle and tower increases, and the assembly operation becomes more complicated and requires extensive use of cranes.

EP3247899 is a relevant document of prior art in this field, which relates to the assembly of wind turbine nacelles.

### SUMMARY

It is an object of embodiments of the disclosure to facilitate assembly operation in wind turbine manufacturing and potentially to increase safety and working conditions, particularly during assembly.

For these and other purposes, embodiments of the disclosure, in a first aspect, provide a method for making a nacelle for attachment to a wind turbine tower, the method comprising:
- providing a main frame configured to form a load path from a drive train to the wind turbine tower;
- providing, on the main frame, a mounting structure for mounting a crane;
- providing a crane for mounting on the mounting structure;
- mounting the crane to the mounting structure before the nacelle is attached to the wind turbine tower; and
- using the crane for assembly operation before the nacelle is attached to the wind turbine tower.

The use of the crane before the nacelle is attached to the wind turbine tower may e.g. be during assembly of the nacelle, e.g. at an assembly facility such as a factory away from the site where the wind turbine tower is erected.

Manufacturing sites for nacelles are normally large, dedicated buildings with lifting capacity provided by gantry cranes and similar fixtures of the building. This limits the ability to make nacelles locally, i.e. near the site of the wind turbine tower. Typically, the nacelles are made in serial production and shipped relatively long distances to the point where it is attached to the tower. Attaching a crane to the main frame of the nacelle already before the nacelle is attached to the tower, enables a completely new way of making nacelles, and particularly allows the use of smaller and less dedicated production facilities for nacelle production, e.g. buildings near the site of the tower, and e.g. buildings with no crane facility.

A secondary mounting structure for mounting a secondary crane may be provided on the main frame, and a secondary crane may be mounted to the secondary mounting structure, and the crane and the secondary crane may be used in combination for assembly operation before the nacelle is attached to the wind turbine tower. The two cranes may e.g. be used in combination for heavy or complicated lifting operation, e.g. for lifting parts of the drive train.

In nacelle manufacturing, the main frame and the mounting structure may be produced firstly, and a crane be mounted on the mounting structure. The mounting structure may form an integrated part of the main frame. As an example, the main frame could be a casted component, and the mounting structure could be a surface, e.g. a machined flange of the casted component, or any similar structural part of the main frame which supports mounting of the crane.

Subsequently, that crane may be used for subsequent assembly procedures, e.g. for mounting side panels to form the outer casing of the nacelle, for lifting components onto the main frame, e.g. for mounting the drive train or parts thereof, or for other assembly procedures related to nacelle manufacturing.

In one embodiment, the outer casing of the nacelle or at least parts of the outer casing of the nacelle is mounted to the main frame before the crane is mounted on the mounting structure, and the crane is used for assembling inter alia internal components, e.g. components of the drive train. In another embodiment, the outer casing of the nacelle or at least parts of the outer casing of the nacelle is mounted to the main frame after the crane has been mounted on the mounting structure, and the crane is used for assembling inter alia such casing components and/or internal components, e.g. components of the drive train.

Before use of the crane or secondary crane for assembly operation, the main frame may be fixed to a fixture of the manufacturing site, e.g. to the floor of the assembly facility. This allows more complicated lifting operation and transfer of torque to the floor or similar fixture.

For this purpose, the main frame may include a predefined fixation structure arranged to provide a pre-defined load path from the assembly facility, through the main frame, to the mounting structure and thus to the crane. This allows use of the crane prior to the attachment of the nacelle to the wind turbine tower and allows the forces to be transferred from the crane to the assembly facility in a pre-defined manner - e.g. directly into the floor of the assembly facility.

The crane or the secondary crane may be used for assembly operation on another nacelle than the one to which the crane or secondary crane is mounted. In an assembly facility where several nacelles are made simultaneously and lined up, e.g. side-by-side, the cranes could be used for assembly work on an adjacent nacelle.

In one embodiment, two cranes are used in combination for assembly operation before the nacelle is attached to the wind turbine tower, one of the two cranes are attached to the main frame of a first nacelle, and the other of the two cranes are attached to the main frame of a second nacelle. The assembly operation may be related to the first or second nacelle or to a third nacelle, i.e. a nacelle not connected to any of the two cranes.

Alternatively, or additionally, the crane or the secondary crane may be used for assembly operation on the nacelle to which the crane or secondary crane is mounted.

At least one of the mounting structure and secondary mounting structure may be used for carrying a crane which is used for further assembly or maintenance operation after the nacelle is attached to the wind turbine tower. This may e.g. be for lifting components or spare parts from the foot of the tower to the tower top, for mounting blades, or for other tasks related to assembly or maintenance operation.

Particularly, the mounting structure may facilitate releasable attachment of a crane to the main frame so that the crane or cranes can be detached after use and reused on another wind turbine or such that the crane can be detached from the main frame before the nacelle is transported to the site of the wind turbine tower, e.g. for re-attachment to the main frame once the nacelle arrives at the site, either before or after the nacelle is attached to the wind turbine tower.

Accordingly, the crane(s) used during manufacturing at an assembly facility away from the site of the tower may be detached and re-used at the side of the assembly facility for assembly of other nacelles. In another embodiment, the crane or cranes used during manufacturing at an assembly facility away from the site of the tower may be detached and shipped to the site of the wind turbine tower where they are re-attached to the nacelle and used for further assembly or maintenance operation before or after the nacelle is attached to the tower. In another embodiment, the crane or cranes used during manufacturing at an assembly facility away from the site of the tower may stay on the mounting structure and shipped together with the nacelle to which it is attached, to the site of the wind turbine tower where they are used for further assembly or maintenance operation before or after the nacelle is attached to the tower.

At least one of the crane and the secondary crane may be used for further assembly operation after the nacelle is attached to the wind turbine tower.

In a second aspect, the disclosure provides a nacelle for mounting on a wind turbine tower and housing components of a wind turbine drive train, the nacelle comprising a main frame configured to form a load path from the drive train to a wind turbine tower to which the nacelle can be attached, the nacelle further comprising a crane mounted on a mounting structure on the main frame.

The nacelle according to second aspect is for mounting on a wind turbine tower meaning that it is not yet mounted on the tower. In this, unmounted, state of the nacelle, the crane is mounted on the mounting structure on the main frame. This allows use of the crane e.g. away from the tower during manufacturing of the nacelle or other nacelles in an assembly facility.

The nacelle thereby becomes self-assembling in the sense that the crane mounted on the nacelle while the nacelle is not yet mounted on the wind turbine tower, can be used for assembling the nacelle itself.

The crane may be detachably mounted to allow re-use on the same or different nacelles during manufacturing or maintenance.

The nacelle may be fixed to a fixture of a manufacturing site configured for manufacturing of nacelles and in the fixed state the crane or cranes can be used for lifting operation while the torque is transferred to the fixture. The fixture may particularly connect the nacelle to a floor or wall of the manufacturing site.

When the cranes are used away from the tower, the crane may powered by a power supply of a manufacturing site configured for manufacturing of nacelles, and when the cranes are used at the tower, e.g. after the nacelle is attached to the tower, the crane or cranes may be powered by an internal power supply of the wind turbine, e.g. powered by power produced by the wind turbine.

According to the second aspect, the crane also comprises a power connector for releasable connection to a power supply of a manufacturing site configured for manufacturing of nacelles. The power connector and power supply may be configured for hydraulic and/or electric power.

In one embodiment, the power supply for the crane is an internal component of the nacelle. Also in this embodiment, the power supply may be releasably connectable to the crane such that it can be used both during manufacturing of the nacelle in an assembly facility and later at the site of the wind turbine tower with detachment and reattachment of the crane between the two locations.

In a third aspect, the disclosure provides a wind turbine comprising a nacelle according to the second aspect. The wind turbine may comprise a power supply connectable to the power connector of the crane. This will allow easy, safe, and fast reconfiguration from a crane being operable in a manufacturing site away from the tower to a crane being operable on the top of the tower, e.g. for final assembly of the wind turbine or for maintenance after the wind turbine has been commissioned.

In a fourth aspect, the disclosure provides a combination comprising said nacelle and a manufacturing facility configured for manufacturing of nacelles. The manufacturing facility comprises a fixture arranged to be operable with the main frame for creating a predefined load path from the crane to the assembly site. This increases safety in operation and enables use of the crane while attached on the nacelle for manufacturing of nacelles in the manufacturing facility.

### LIST OF DRAWINGS

In the following, embodiments of the disclosure will be described in further details with reference to the drawing in which:
Fig. 1 illustrates a wind turbine;
Fig. 2 illustrates a schematic top view of a nacelle with a main frame;
Fig. 3 illustrates a main frame located in a manufacturing facility;
Fig. 4 illustrates the main frame with cranes;
Figs. 5-8 illustrate an assembly procedure where two cranes are synchronised to make a combined lifting operation; and
Figs. 9-11 illustrate an embodiment where the crane is housed in an auxiliary unit forming part of the nacelle.

### DESCRIPTION OF EMBODIMENTS

The detailed description and specific examples, while indicating embodiments, are given by way of illustration only, since various changes and modifications within the scope of this disclosure will become apparent to those skilled in the art from this detailed description.

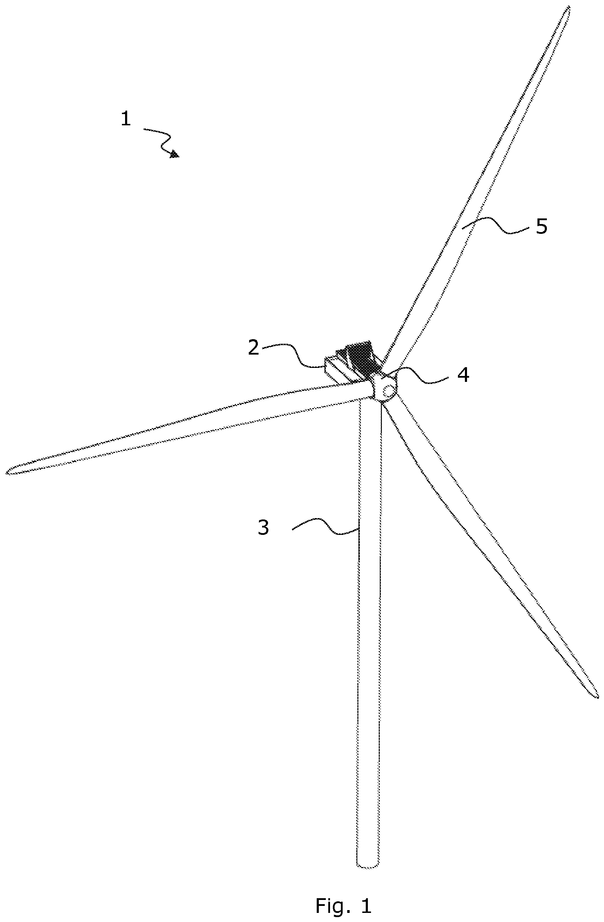

Fig. 1 illustrates a wind turbine 1 with a nacelle 2 mounted on a tower 3. A hub 4 carrying three rotor blades 5 is mounted at the nacelle 2. The nacelle supports a rotor-supporting assembly inside the nacelle. Typically, the rotor-supporting assembly comprises a rotor shaft connecting a gear arrangement and a generator to the hub.

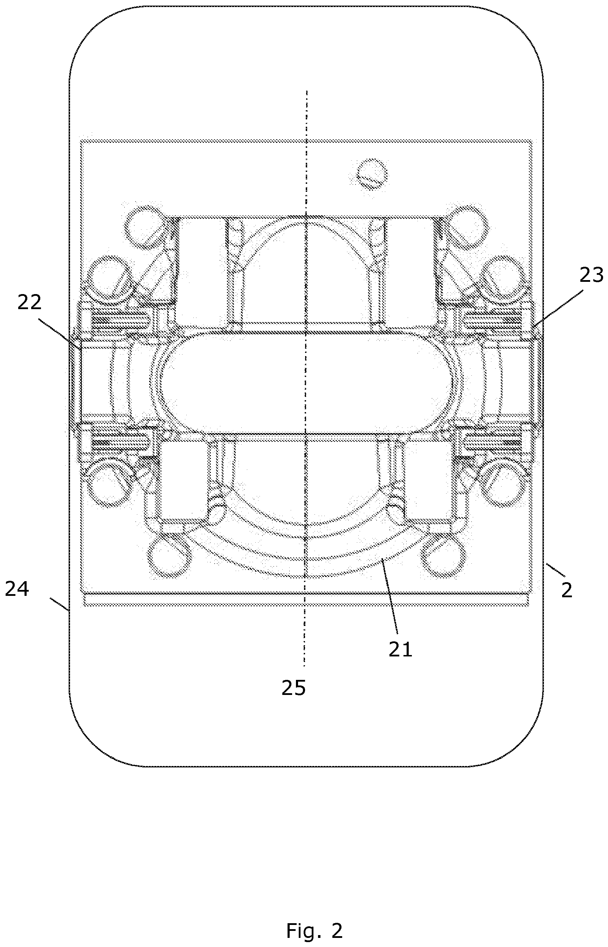

Fig. 2 shows, in a top view, the nacelle 2, and the main frame 21. The main frame is configured to form a load path from a drive train down into the tower and typically joins the tower in a yaw arrangement allowing yawing of the drive train to comply with the wind direction. The main frame supports the rotor shaft via a main bearing (not shown) and holds two mounting structures 22, 23 each configured to support a crane and transfer the load of the crane to the main frame and thereby down into the tower. In the disclosed embodiment, the mounting structure is a lattice structure. However, the mounting structure could also be a surface part of the main frame, particularly when the main frame is a casted component. In this case, a particular part of the surface of the casted component could be configured for mounting the crane and thereby constitute the mounting structure. The surface could e.g. form a plane, machined surface portion, e.g. with drilled, threaded holes for bolting the crane to the casted main frame.

The main frame may particularly be a heavy steel component, e.g. a casted steel component or a component made of welded steel elements. The mounting structure may particularly comprise steel bars joined by traditional methods such as by welding, or the mounting structure may, as mentioned above, be formed by a surface of a casted component.

The mounting structure forms a platform for attachment of a crane. The crane may be bolted onto the mounting structure thereby forming releasable joining of the crane and nacelle. This allows replacement of the crane, e.g. for reuse of the crane at the manufacturing site and attachment of a new crane on the site of the tower.

Fig. 2 illustrates that the mounting structure forms an interface to the crane which is directly against an inner surface of a side panel 24 of the nacelle. This configuration allows the crane to be placed along an outer surface of a side panel and directly connected to the main frame inside the nacelle.

In the illustrated embodiment, the main frame comprises two mounting structures for a crane on opposite sides of a vertical plane through the rotor axis illustrated by the dotted line 25. Other embodiments may include one single mounting structure or more than one mounting structure.

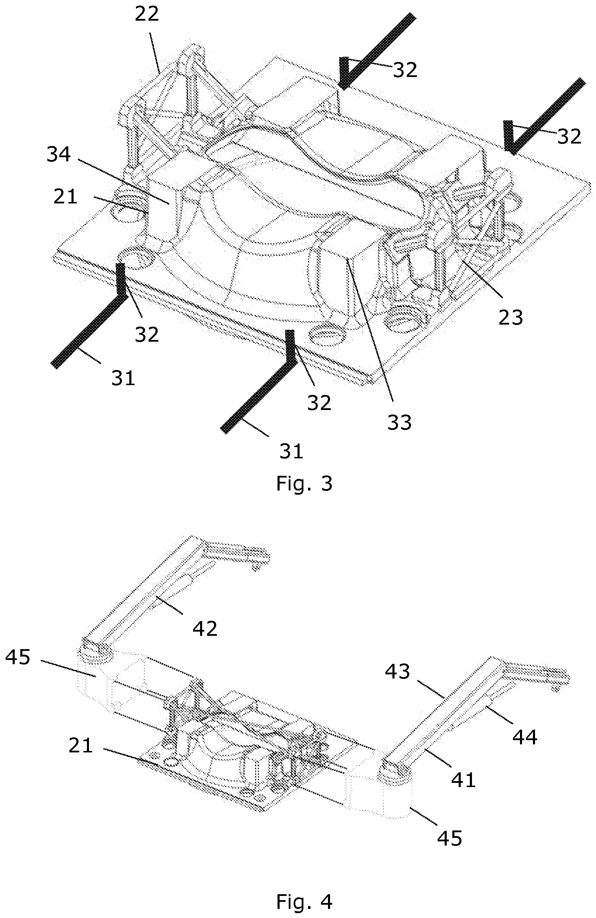

In Fig. 3 the main frame is placed in an assembly facility away from the tower, e.g. in a factory for nacelle manufacturing. The assembly facility comprises a fixture 31, herein having the shape of floor rails, to which the main frame can be fixed by use of clamps 32. Fixing the main frame to a fixture of the manufacturing site before use of the crane enables loads and particularly torque from the crane to be transferred into the fixture and thus enables complicated and heavy lifting by use of the crane during manufacturing of the nacelle.

In the illustrated embodiment, the clamps 32 can slide along the floor rails and thereby provide fixation of the main frame at many different locations in the assembly facility. In a simpler embodiment, the main frame is simply bolted into a concrete floor of the assembly facility.

The main frame is fitted with a crane control module 33, 34 for each mounting structure. The crane control module may include computer control means for controlling crane operation and optionally with power supply for powering the crane. Since the crane control module forms part of the main frame, it can be used with the crane during the assembly procedure in the assembly facility and subsequently be used with the crane when the nacelle arrives at the site of the tower. The crane control module is attached to the crane be a detachable cable interface to allow detachment and reattachment of the crane to the main frame.

Fig. 4 illustrates the main frame before it is attached to the tower, and with a crane 41, and a secondary crane 42 attached to the mounting structures of the main frame. The main frame may e.g. be in an assembly facility away from the tower or at the foot of the tower ready for being hoisted and attached to the top of the tower.

The cranes 41, 42 could be attached to the mounting structures during manufacturing and be moved to the site of the tower and to the tower top in an assembled state with the nacelle. Alternatively, the cranes may be used only during manufacturing and be detached from the nacelle before it is shipped to the site of the tower. In this case other cranes can be attached to the mounting structures at the site of the tower either before or after the nacelle is attached to the tower top. The illustrated cranes are hydraulically actuated cranes with a main crane bar 43 being raised or lowered by a hydraulic cylinder 44, but any crane structure may be applied. The crane(s) may alternatively be electrically actuated or partly electrical and partly hydraulically actuated.

For easy handling of the crane, the crane may include an optional crane foundation 45 shown with dotted lines. The crane foundation may include, or supplement said crane control module and may include power supply means, spare parts, tools, and/or other elements useful for operation of the crane. By placing such element in the crane foundation, the crane can, selectively, be replaced with or without the foundation thereby providing the option of replacing the crane with or without replacing all the elements used during crane operation. The ensures compliance between the crane and the control components for the crane.

In Fig. 4, the cranes are illustrated when attached to the mounting structure before the outer casing panels of the nacelle are attached. In another procedure, the panels are partly or completely attached to the main frame before the crane(s) are attached.

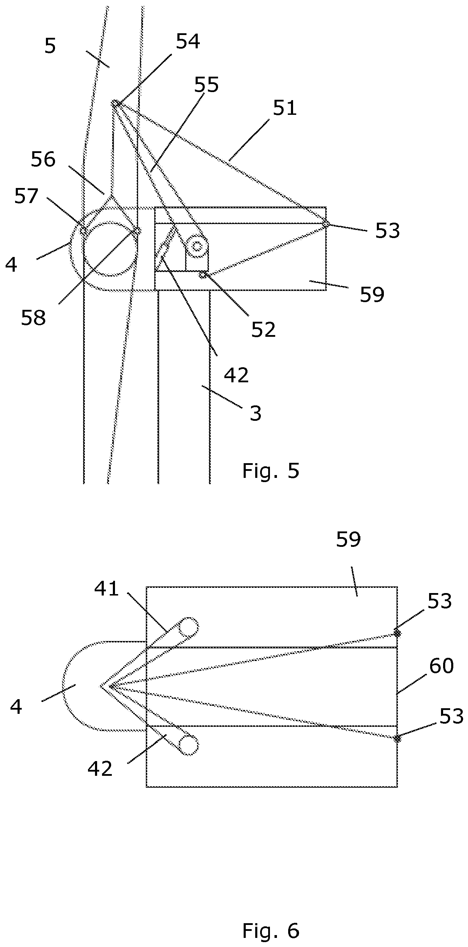

Figs. 5 and 6 illustrate a side view and a top view of the nacelle in an embodiment with a crane 41 and a secondary crane 42. The crane line 51 runs from a winch 52 around a pulley 53 placed at the rear end of the nacelle. From the pulley, the crane line 51 extends to the top pulley 54 at the end of the crane arm 55 and ends in a spreader which separates the hoisting point 56 into two hoisting points 57, 58 attached to the hub or to the blades for lifting and assembling the hub to the rotor supporting assembly in the nacelle.

The crane can comprise any known form of crane including any kind of support column or crane arm, and with or without articulation ability for the arm. The crane may include a jib, e.g. attached to the crane in a manner known from tower cranes, and the crane arm may be expandable, e.g. in a telescopic way. The cranes are used for lifting the hub with the blades in a lifting operation combining the lifting of the cranes. In the illustrated embodiment, the operation is carried out after the nacelle is attached to the tower top.

In the embodiment of Figs. 5 and 6, the crane is housed in a separate crane housing 59 which is detachably attached to the nacelle 60. The separate crane housing can be used for transporting the crane to and from the site of the wind turbine tower, and it may protect the crane not only during transport but also during use. The crane housing 59 may, once attached to the nacelle, form an integrated part of the wind turbine, and it may define an interior space which expands the interior of the nacelle and can be used during operation of the wind turbine.

The separate crane housing may include said crane control module.

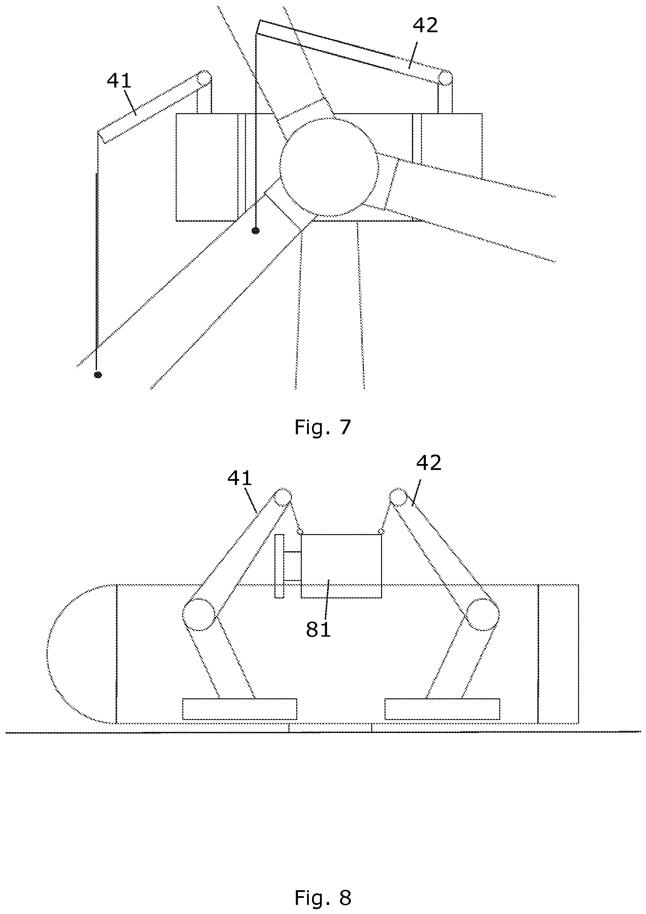

Fig. 7 illustrates another lifting operation carried out after the nacelle is attached to the tower top. In this procedure, blades are attached to the hub by coordinated use of the crane 41 and the secondary crane 42.

Fig. 8 illustrates a lifting operation carried out in an assembly facility away from the tower, i.e. before the nacelle is lifted to the tower top. In the operation, the crane 41 and the secondary crane is used in a coordinated mutual operation for lifting a component 81 of the drive train into the nacelle during manufacturing of the nacelle. In Fig. 8, the procedure takes place in an assembly site but it could also take place after the nacelle is mounted on the tower.

In the illustration in Fig. 8, the cranes are located side by side in the direction of the rotor axis. The cranes may, alternatively be located as illustrated in Fig. 7, i.e. on opposite sides of the drive shaft.

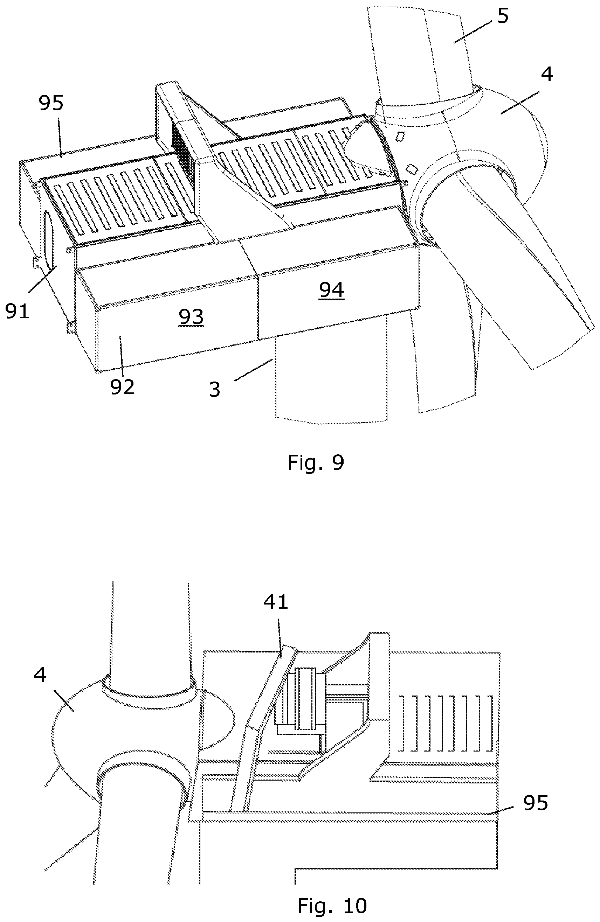

Fig. 9 illustrates in further details of an embodiment where the nacelle comprises a main unit 91 and one or more auxiliary units 92 releasably joined to the main unit. In the illustrated embodiment, the main unit 91 forms a main part of the nacelle and houses the main frame. The main unit 91is mounted on the tower 3 via a yawing arrangement (not shown), allowing the nacelle 2 to rotate to direct rotor blades 5 carried by the hub 4 into the wind. The auxiliary unit 92 comprises two separate compartments 93, 94. One of the two compartments 93, 94 forms the separate crane housing and contains a crane, and the other one of the two compartments 93, 94 facilitates accommodation of crew members working on the assembly of the wind turbine. The auxiliary unit 95 forms a separate crane housing and accommodates a crane.

Fig. 10 illustrates the wind turbine seen from the opposite side and with the hatch in an open position. The crane 41 is unfolded and ready to operate.

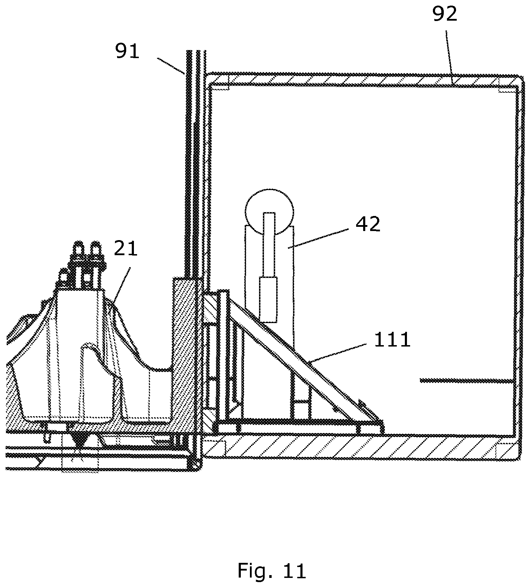

Fig. 11 illustrates the main unit 91 and the auxiliary unit 92 in a cross section. The crane 42 is carried by the support frame 111 resting on the bottom of the auxiliary unit 92 and it is suspended directly on the main frame 21 inside the main unit 91. The main frame thereby forms part of the load path for the crane into the tower.

When the crane is used at the manufacturing site and subsequently at the tower site, the auxiliary unit may be used for transporting the crane from the manufacturing site to the tower site, and at the tower site, the auxiliary unit with the crane may be joined to the main unit and thereby form the nacelle.

In all drawings, the disclosure relates to a traditional wind turbine of the kind normally referred to as "horizontal axis wind turbine". The disclosure, however, equally relates to Multiple rotor wind turbines where several nacelles are mounted to the same tower, e.g. via load carrying structures extending outwards from the tower.

## Claims

1. A method for making a nacelle (2) for attachment to a wind turbine tower (3), the method comprising:
- providing a main frame (21) configured to form a load path from a drive train to the wind turbine tower (3);
- providing, on the main frame (21), a mounting structure (22) for mounting a crane;
- providing a crane (41) for mounting on the mounting structure (22);
the method being **characterized in that** it further comprises:
- mounting the crane to the mounting structure before the nacelle (2) is attached to the wind turbine tower (3); and
- using the crane (41) for assembly operation before the nacelle (2) is attached to the wind turbine tower (3).

2. The method according to claim 1, comprising providing on the main frame, a secondary mounting structure (23) for mounting a secondary crane (42), and mounting the secondary crane to the secondary mounting structure.

3. The method according to claim 2, comprising using the crane and the secondary crane in combination for assembly operation before the nacelle is attached to the wind turbine tower.

4. The method according to any of the preceding claims, wherein at least one of the crane (41) and the secondary crane (42) is used for an assembly operation in a manufacturing site abroad from a site of the wind turbine tower (3).

5. The method according to claim 4, wherein two cranes are used in combination for assembly operation, one of the two cranes being attached to the main frame of a first nacelle, and the other of the two cranes being attached to the main frame of a second nacelle.

6. The method according to any of the preceding claims, wherein the assembly operation before the nacelle is attached to the wind turbine tower comprises assembly of a component (81) of a drive train in the nacelle.

7. The method according to any of the preceding claims, wherein at least one of the mounting structure (22) and secondary mounting structure (23) is used for carrying a crane which is used for further assembly or maintenance operation after the nacelle (2) is attached to the wind turbine tower (3).

8. The method according to any of the preceding claims, wherein at least one of the crane (41) and the secondary crane (42) is used for further assembly operation after the nacelle (2) is attached to the wind turbine tower (3).

9. A nacelle (2) for mounting on a wind turbine tower (3) and housing components (81) of a wind turbine drive train, the nacelle comprising a main frame (21) configured to form a load path from the drive train to a wind turbine tower (3) to which the nacelle (2) can be attached, the nacelle further comprising a crane (41) mounted on a mounting structure (22) on the main frame, **characterized in that** the crane comprises a power connector for releasable connection to a power supply of a manufacturing site configured for manufacturing of nacelles.

10. The nacelle according to claim 9, wherein the crane is detachably mounted.

11. The nacelle according to claim 9 or 10, wherein the nacelle is fixed to a fixture of a manufacturing site configured for manufacturing of nacelles.

12. The nacelle according to any of claims 9-11, comprising a main unit and an auxiliary unit, the main unit housing the main frame, and the auxiliary unit being detachably attached to the main unit, said auxiliary unit optionally houses at least one crane.

13. A wind turbine comprising a nacelle according to claims 9-12.

14. The wind turbine according to claim 13 comprising a power supply connectable to the power connector of the crane.

15. A combination comprising a nacelle according to claim 9 and a manufacturing facility configured for manufacturing of nacelles, the manufacturing facility comprising a fixture (32) arranged to be operable with the main frame for creating a predefined load path from the crane (41) to the assembly site.

## Patentansprüche

1. Verfahren zur Herstellung einer Gondel (2) zur Befestigung an einem Windkraftanlagenturm (3), wobei das Verfahren Folgendes umfasst:
- Bereitstellen eines Hauptrahmens (21), der so konfiguriert ist, dass er einen Lastpfad von einem Antriebsstrang zum Windkraftanlagenturm (3) bildet;
- Bereitstellen einer Aufbaustruktur (22) am Hauptrahmen (21) zum Aufbauen eines Krans;
- Bereitstellen eines Krans (41) zum Aufbauen an der Aufbaustruktur (22);
wobei das Verfahren **dadurch gekennzeichnet ist, dass** es weiter Folgendes umfasst:
- Aufbauen des Krans an der Aufbaustruktur, bevor die Gondel (2) am Windkraftanlagenturm (3) befestigt wird; und
- Verwenden des Krans (41) für einen Montagevorgang, bevor die Gondel (2) am Windkraftanlagenturm (3) befestigt wird.

2. Verfahren nach Anspruch 1, das das Bereitstellen einer sekundären Aufbaustruktur (23) am Hauptrahmen zum Aufbauen eines Sekundärkrans (42) und das Aufbauen des Sekundärkrans an der sekundären Aufbaustruktur umfasst.

3. Verfahren nach Anspruch 2, das die kombinierte Verwendung des Krans und des Sekundärkrans für den Montagevorgang umfasst, bevor die Gondel am Windkraftanlagenturm befestigt wird.

4. Verfahren nach einem der vorstehenden Ansprüche, wobei mindestens einer von dem Kran (41) und dem Sekundärkran (42) für den Montagevorgang in einem Produktionsstandort außerhalb eines Standorts des Windkraftanlagenturms (3) verwendet wird.

5. Verfahren nach Anspruch 4, wobei für den Montagevorgang zwei Kräne in Kombination verwendet werden, wobei einer der beiden Kräne am Hauptrahmen einer ersten Gondel befestigt wird und der andere der beiden Kräne am Hauptrahmen einer zweiten Gondel befestigt wird.

6. Verfahren nach einem der vorstehenden Ansprüche, wobei der Montagevorgang vor der Befestigung der Gondel am Windkraftanlagenturm die Montage einer Komponente (81) eines Antriebsstrangs in der Gondel umfasst.

7. Verfahren nach einem der vorstehenden Ansprüche, wobei mindestens eine von der Aufbaustruktur (22) und der sekundären Aufbaustruktur (23) zum Tragen eines Krans verwendet wird, der für weitere Montage- oder Wartungsvorgänge verwendet wird, nachdem die Gondel (2) am Windkraftanlagenturm (3) befestigt wurde.

8. Verfahren nach einem der vorstehenden Ansprüche, wobei mindestens einer von dem Kran (41) und dem Sekundärkran (42) für einen weiteren Montagevorgang verwendet wird, nachdem die Gondel (2) am Windkraftanlagenturm (3) befestigt wurde.

9. Gondel (2) zum Aufbauen an einem Windkraftanlagenturm (3) und Gehäusekomponenten (81) eines Windkraftanlagenantriebsstrangs, wobei die Gondel einen Hauptrahmen (21) umfasst, der so konfiguriert ist, dass er einen Lastpfad vom Antriebsstrang zu einem Windkraftanlagenturm (3) bildet, an dem die Gondel (2) befestigt werden kann, wobei die Gondel weiter einen Kran (41) umfasst, der an einer Aufbaustruktur (22) am Hauptrahmen aufgebaut ist, **dadurch gekennzeichnet, dass** der Kran einen Stromanschluss zum lösbaren Anschluss an einer Stromversorgung eines Produktionsstandorts aufweist, die für die Produktion von Gondeln konfiguriert ist.

10. Gondel nach Anspruch 9, wobei der Kran abnehmbar aufgebaut ist.

11. Gondel nach Anspruch 9 oder 10, wobei die Gondel an einer Vorrichtung eines Produktionsstandorts befestigt ist, die für die Produktion von Gondeln konfiguriert ist.

12. Gondel nach einem der Ansprüche 9-11, umfassend eine Haupteinheit und eine Hilfseinheit, wobei die Haupteinheit den Hauptrahmen beherbergt und die Hilfseinheit abnehmbar an der Haupteinheit befestigt ist, wobei die Hilfseinheit optional mindestens einen Kran beherbergt.

13. Windkraftanlage, die eine Gondel nach den Ansprüchen 9-12 umfasst.

14. Windkraftanlage nach Anspruch 13, umfassend eine Stromversorgung, die an den Stromanschluss des Krans angeschlossen werden kann.

15. Kombination, umfassend eine Gondel nach Anspruch 9 und eine Produktionsanlage, die für die Produktion von Gondeln konfiguriert ist, wobei die Produktionsanlage eine Vorrichtung (32) umfasst, die so angeordnet ist, dass sie mit dem Hauptrahmen betrieben werden kann, um einen vordefinierten Lastpfad vom Kran (41) zum Montagestandort zu erstellen.

## Revendications

1. Procédé de fabrication d'une nacelle (2) destinée à être fixée à une tour éolienne (3), le procédé comprenant :
- la fourniture d'un châssis principal (21) configuré pour former un trajet de charge depuis un train d'entraînement jusqu'à la tour éolienne (3) ;
- la fourniture, sur le châssis principal (21), d'une structure de montage (22) pour monter une grue ;
- la fourniture d'une grue (41) à monter sur la structure de montage (22) ;
le procédé étant **caractérisé en ce qu'**il comprend en outre :
- le montage de la grue sur la structure de montage avant que la nacelle (2) ne soit fixée à la tour éolienne (3) ; et
- l'utilisation de la grue (41) pour une opération d'assemblage avant que la nacelle (2) ne soit fixée à la tour éolienne (3).

2. Procédé selon la revendication 1, comprenant la fourniture sur le châssis principal d'une structure de montage secondaire (23) pour monter une grue secondaire (42), et le montage de la grue secondaire sur la structure de montage secondaire.

3. Procédé selon la revendication 2, comprenant l'utilisation de la grue et de la grue secondaire en combinaison pour une opération d'assemblage avant que la nacelle ne soit fixée à la tour éolienne.

4. Procédé selon l'une quelconque des revendications précédentes, dans lequel au moins une parmi la grue (41) et la grue secondaire (42) est utilisée pour une opération d'assemblage dans un site de fabrication ailleurs qu'un site de la tour éolienne (3).

5. Procédé selon la revendication 4, dans lequel deux grues sont utilisées en combinaison pour l'opération d'assemblage, l'une des deux grues étant fixée au châssis principal d'une première nacelle, et l'autre des deux grues étant fixée au châssis principal d'une seconde nacelle

6. Procédé selon l'une quelconque des revendications précédentes, dans lequel l'opération d'assemblage avant que la nacelle ne soit fixée à la tour éolienne comprend un assemblage d'un composant (81) d'un train d'entraînement dans la nacelle.

7. Procédé selon l'une quelconque des revendications précédentes, dans lequel au moins une parmi la structure de montage (22) et la structure de montage secondaire (23) est utilisée pour transporter une grue qui est utilisée pour une opération d'assemblage ou de maintenance ultérieure après que la nacelle (2) soit fixée à la tour éolienne (3).

8. Procédé selon l'une quelconque des revendications précédentes, dans lequel au moins une parmi la grue (41) et la grue secondaire (42) est utilisée pour une opération d'assemblage ultérieure après que la nacelle (2) soit fixée à la tour éolienne (3).

9. Nacelle (2) destinée à être montée sur une tour éolienne (3) et logeant des composants (81) d'un train d'entraînement d'éolienne, la nacelle comprenant un châssis principal (21) configuré pour former un trajet de charge depuis le train d'entraînement jusqu'à une tour éolienne (3) à laquelle la nacelle (2) peut être fixée, la nacelle comprenant en outre une grue (41) montée sur une structure de montage (22) sur le châssis principal, **caractérisée en ce que** la grue comprend un connecteur de puissance pour une connexion amovible à une distribution d'énergie d'un site de fabrication configuré pour la fabrication de nacelles.

10. Nacelle selon la revendication 9, dans laquelle la grue est montée de manière amovible.

11. Nacelle selon la revendication 9 ou 10, dans laquelle la nacelle est fixée à un accessoire d'un site de fabrication configuré pour la fabrication de nacelles.

12. Nacelle selon l'une quelconque des revendications 9-11, comprenant une unité principale et une unité auxiliaire, l'unité principale logeant le châssis principal, et l'unité auxiliaire étant fixée de manière amovible à l'unité principale, ladite unité auxiliaire logeant facultativement au moins une grue.

13. Éolienne comprenant une nacelle selon l'une quelconque des revendications 9-12.

14. Éolienne selon la revendication 13, comprenant une distribution d'énergie pouvant être connectée au connecteur de puissance de la grue.

15. Combinaison comprenant une nacelle selon la revendication 9 et une installation de fabrication configurée pour fabriquer des nacelles, l'installation de fabrication comprenant un accessoire (32) agencé pour pouvoir fonctionner avec le châssis principal afin de créer un trajet de charge prédéfini depuis la grue (41) jusqu'au site d'assemblage.
